Europäisches Patentamt

European Patent Office

Office européen des brevets

(19)

(11) Numéro de publication: **0 195 702
B1**

(12) **FASCICULE DE BREVET EUROPEEN**

(45) Date de publication du fascicule du brevet:
**01.06.88**

(51) Int. Cl.⁴: **A 23 P 1/12,** A 23 L 1/16,
A 21 C 11/20

(21) Numéro de dépôt: **86400416.3**

(22) Date de dépôt: **26.02.86**

(54) **Procédé et dispositif de préparation d'un produit alimentaire à base de pâte molle.**

(30) Priorité: **04.03.85 FR 8503121**

(43) Date de publication de la demande:
**24.09.86 Bulletin 86/39**

(45) Mention de la délivrance du brevet:
**01.06.88 Bulletin 88/22**

(84) Etats contractants désignés:
**BE CH DE GB IT LI LU NL**

(56) Documents cités:
**EP - A - 0 039 957
WO - A - 84/03420
FR - A - 2 554 685
US - A - 4 423 082**

**FOOD TECHNOLOGY, vol. 38, no. 11, novembre 1984,
page 61, Werner & Pfleiderer Co., Chicago, Illinois, US;
"Total flexibility"**

(73) Titulaire: **CLEXTRAL, Tour Fiat 1 place de la Coupole,
F-92400 Courbevoie (FR)**

(72) Inventeur: **Fere, Guy, 32bis rue Penel, F-42240 Unieux
(FR)**
Inventeur: **Jouve, Daniel, 9 rue Jean de Tournes,
F-69002 Lyon (FR)**

(74) Mandataire: **Bressand, Georges et al, c/o CABINET
LAVOIX 2 Place d'Estienne d'Orves, F-75441 Paris
Cedex 09 (FR)**

## Description

L'invention a pour objet un procédé de préparation d'un produit alimentaire analogue à une quenelle, à base d'un produit végétal apportant de l'amidon et dans laquelle est incorporée au moins une matière d'addition. L'invention couvre également les produits alimentaires préparés selon le procédé.

On connaît depuis longtemps un produit alimentaire appelé «quenelle» réalisé à partir d'une pâte molle et humide mélangée à des additifs tels que du poisson, de la viande, de la volaille ou des légumes. Dans le mode de réalisation traditionnel, la pâte de base, appelée aussi «panade», est réalisée par cuisson en milieu hydraté d'une farine et/ou d'une semoule de céréales. La farine et la phase liquide, constituée d'eau et/ou de lait, est malaxée et cuite dans un pétrin cuiseur, les proportions pouvant être par exemple de 50 litres d'eau pour 50 kg de farine et/ou de semoule. La cuisson doit être menée assez longtemps pour obtenir une déshydratation suffisante de la matière avec expansion des amidons et peut durer de 3 à 5 heures. La panade ainsi obtenue est ensuite mélangée avec des matières carnées ou végétales et/ou, éventuellement, des matières grasses et de l'œuf. Une précuisson permet de stabiliser le produit qui peut être extrudé sous forme de barres rondes allongées pouvant se conserver 5 à 6 jours à température assez basse, la cuisson complète étant obtenue par simple pochage.

En raison de la difficulté relative de la préparation et surtout du temps de cuisson, la quenelle est restée un produit assez luxueux et ce mode de préparation traditionnel a été pratiquement abandonné et n'est encore utilisé que de façon artisanale dans certaines régions. Actuellement, en effet, la pâte de base est réalisée de façon industrielle par dessèchement préalable d'une farine de froment dans des fours continus pendant plusieurs heures, la farine desséchée étant ensuite mélangée avec la quantité voulue de phase liquide. Ce procédé industriel reste assez long et ne peut, en pratique, être utilisé que pour des farines de froment, les semoules risquant notamment de griller avant l'éclatement de l'amidon.

Par ailleurs, on connaît dans le brevet US-A-4 423 082 un procédé de préparation d'un produit à base d'amidon pouvant contenir des matières d'addition telles que de la farine de soja, des œufs et du lait. Dans une première étape de ce procédé, la pâte est complètement gélatinisée, puis elle est refroidie et extrudée.

Un objet de l'invention est de mettre au point un procédé industriel de préparation de produits du genre quenelle dans lequel on respecte autant que possible le processus traditionnel de préparation sans en avoir les inconvénients, la pâte de base et le produit final étant réalisés de façon continue et rapide. Dans ce procédé, il est possible, comme dans le procédé traditionnel, d'utiliser non seulement des farines de froment mais également d'autres formes de céréales et notamment des semoules. Mais on pourra aussi utiliser d'autres produits végétaux apportant de l'amidon et même des produits protéagineux ou oléagineux tels que des fèves, du manioc, du maïs, de l'arachide, etc. De la sorte, on pourra réaliser de façon continue, rapide et par conséquent peu onéreuse des produits de toutes sortes présentant les qualités particulières de la quenelle et notamment le fait de constituer un aliment complet, facilement assimilable, et dont la composition et le goût peuvent faire l'objet de multiples combinaisons.

Le procédé selon l'invention est caractérisé par le fait que l'ensemble de la préparation est réalisé à l'intérieur d'un transporteur à vis, en plusieurs étapes se succédant en continu et comprenant, de l'amont à l'aval, dans le sens de transport, respectivement:

— le mélange du produit végétal alimenté en continu avec une phase liquide introduite en quantité juste nécessaire à la recette,

— la cuisson du mélange avec malaxage sous pression et chauffage à une température supérieure à 150°C jusqu'à éclatement des grains d'amidon du produit végétal et obtention d'une pâte molle gélatinisée contenant de 25 à 40% d'eau,

— le broyage de ladite pâte gélatinisée,

— le refroidissement brusque de la pâte broyée en moins de 1 minute jusqu'à une température au plus égale à 60°C permettant l'incorporation de la matière d'addition sans risque de cuisson de celle-ci,

— l'introduction en continu, en proportion correspondant à la recette, de la matière d'addition dans la pâte et son mélange par malaxage avec celle-ci,

— l'extrusion du mélange par une filière placée à l'extrémité aval du transporteur à vis, ce dernier comprenant au moins deux vis entraînées en rotation à l'intérieur d'un fourreau allongé muni d'orifices d'introduction aux endroits voulus des différents ingrédients, les vis étant constituées de sections successives de transport et de traitement correspondant respectivement aux étapes du procédé.

Selon un mode de réalisation préféré, après incorporation et mélange de la matière d'addition avec la pâte gélifiée, le mélange est soumis à un processus d'homogénéisation et de broyage fin poursuivi jusqu'à un degré de finesse déterminé pour le produit. En effet, comme on le verra par la suite, le procédé et le dispositif utilisés permettent, grâce à leur souplesse d'utilisation, de régler la finesse du produit à un degré choisi et par conséquent de réaliser des produits de toutes sortes, depuis les pâtés jusqu'aux quenelles très fines.

Le dispositif selon l'invention, pour la mise en œuvre du procédé, est constitué d'un transporteur à vis comprenant au moins deux vis de transport imbriquées, entraînées en rotation à l'intérieur d'un fourreau allongé et constituées chacune de sections accolées munies d'organes de transport et de traitement spécifiques et déterminant des zones successives correspondant aux étapes successives de la préparation du produit et comprenant respectivement, au moins:

— une zone de transport et de mélange munie de filets hélicoïdaux à pas large et dans laquelle débouchent des orifices d'alimentation en produit végétal et en phase liquide, ménagés dans le fourreau,

— une zone de cuisson et de malaxage sous pression munie de filets dont le pas se resserre progressivement et dans laquelle le fourreau est muni d'organes de chauffage de la matière transportée, jusqu'à une température au moins égale à 150°C,

— une zone de broyage munie de disques malaxeurs excentrés,

— une zone de refroidissement de la pâte broyée jusqu'à une température au plus égale à 60°C et d'incorporation d'au moins une matière d'addition, dans laquelle le fourreau est muni d'organes de refroidissement et d'au moins un orifice d'introduction de la matière d'addition,

— une zone de compression à pas resserré, précédant immédiatement une filière d'extrusion du produit, placée à l'extrémité aval du fourreau.

Dans un mode de réalisation préférentiel, la zone de refroidissement et d'incorporation de la matière d'addition est suivie d'une zone d'homogénéisation et de réglage du degré de finesse du mélange.

A cet effet, il est avantageux d'utiliser une grille interposée en travers du fourreau et munie d'une pluralité d'orifices de passage du produit, de section déterminée en fonction du degré de finesse à obtenir.

Mais la zone d'homogénéisation et de réglage du degré de finesse peut également comporter une série de sections de traitement successives munies d'organes de hachage et de laminage de la pâte dont la nature et le nombre sont déterminés en fonction du degré de finesse à obtenir. Ainsi, la pâte peut passer successivement dans une zone de compression munie de filets à pas resserré de l'amont à l'aval, une section de hachage munie de disques malaxeurs excentrés et une section de laminage munie de filets à pas inversé et comportant des ouvertures de passage contrôlé vers l'aval du produit.

Le procédé et le dispositif selon l'invention permettent de réaliser des produits semblables aux quenelles à partir d'ingrédients qui jusqu'à présent n'étaient pas utilisés dans ce genre de produits.

L'invention sera mieux comprise par la description suivante d'un exemple de réalisation, en se référant aux dessins annexés.

La figure 1 représente un dispositif pour la mise en œuvre du procédé, en coupe longitudinale par l'axe d'une vis.

Les figures 2 et 3 sont des coupes transversales, à échelle agrandie, respectivement selon les lignes II-II et III-III de la figure 1.

Le dispositif est constitué par un transporteur à vis comprenant, d'une façon générale, au moins deux vis 1 entraînées en rotation autour de leurs axes 10 à l'intérieur d'un fourreau 2 qui les enveloppe. De façon avantageuse, les deux vis sont entraînées en rotation dans le même sens et sont munies de filets (ou autres organes périphériques) identiques qui engrènent l'un dans l'autre, la face interne 20 du fourreau étant constituée des deux lobes cylindriques sécants qui enveloppent les deux vis. Celles-ci sont entraînées en rotation autour de leurs axes 10 par un groupe motoréducteur 11.

Les vis 1 sont munies sur leur périphérie d'organes de traitement variés et notamment de filets hélicoïdaux à pas différents déterminant d'une façon générale au moins cinq parties successives:

— une première partie A d'alimentation et de mélange des ingrédients de départ;

— une seconde partie B de cuisson des ingrédients jusqu'à gélification des amidons;

— une troisième partie C de broyage de la pâte gélifiée;

— une quatrième partie D de refroidissement et d'incorporation des additifs;

— une dernière partie F d'extrusion du produit final.

Le plus souvent, et surtout pour la réalisation des pâtes fines, la pâte passe, après incorporation et mélange des additifs, dans une cinquième partie E d'homogénéisation et de réglage du degré de finesse du produit avant son extrusion.

De façon avantageuse, le fourreau peut être constitué de trois parties successives 21, 22, 23 reliées par des brides 24 et correspondant respectivement aux parties A et B, C et D, E et F de la machine dans lesquelles peuvent être réalisés des traitements différents.

Les vis sont constituées avantageusement d'arbres cannelés sur lesquels sont empilés des tronçons de vis constitués de manchons dont la partie intérieure est munie de cannelures correspondant à celles de l'arbre et dont la partie extérieure est munie de filets à pas variés ou autres organes périphériques de traitement et de transport. On peut disposer d'un assez grand nombre de tronçons permettant de faire varier le pas, la profondeur et le nombre des filets ainsi que la longueur de chaque zone.

Dans l'exemple représenté, les vis sont constituées de la façon suivante:

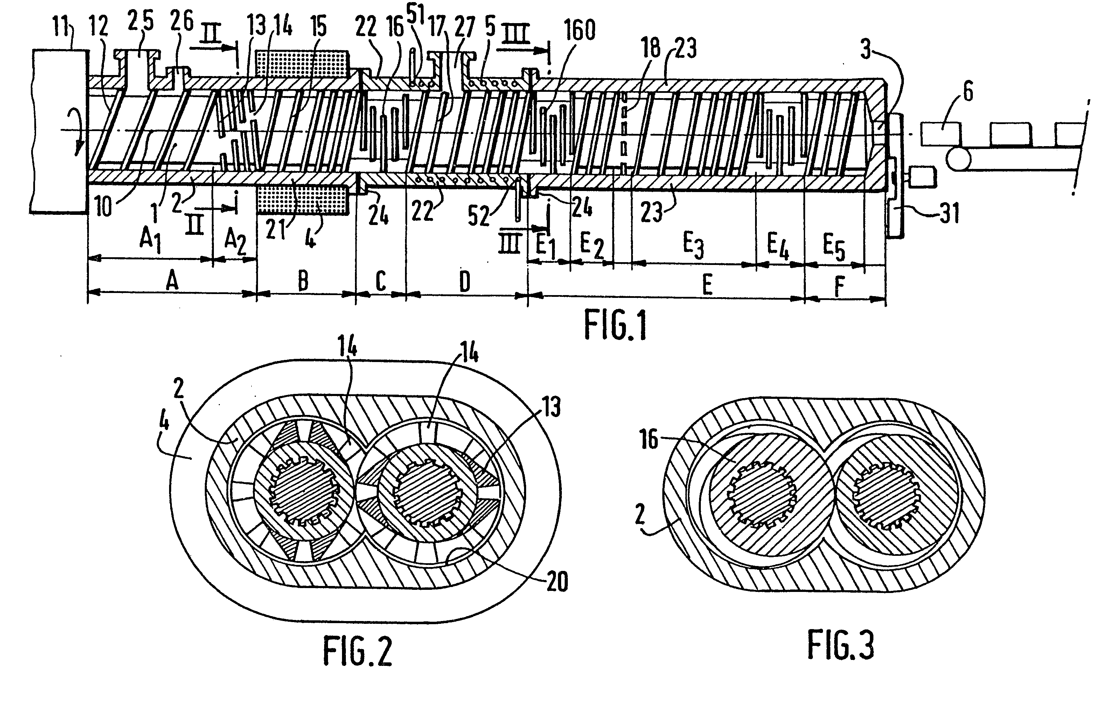

Dans la première partie A d'alimentation et de mélange des ingrédients, le fourreau 2 est muni d'orifices 25 et 26 d'introduction, respectivement, du produit végétal et de la phase liquide. Dans la première section A1, les vis sont munies de filets 12 à pas large qui transportent rapidement vers l'aval le produit végétal introduit sous forme de farine par l'orifice 25, celui-ci s'ouvrant largement sur les deux vis pour faciliter la répartition de la farine dans les filets. La phase liquide, de l'eau ou un produit lacté, est normalement introduite sous pression par une conduite branchée sur l'orifice 26. Cependant, dans certains cas on pourra introduire directement la phase liquide par l'orifice 25 d'alimentation en farine. Les ingrédients sont donc immédiatement transportés vers l'aval et mélangés par l'effet de rotation et d'engrènement des vis. Cet effet de mélange peut être amplifié par l'utilisation d'une section A2 munie de filets 13 à pas inversé dans lesquels sont ménagées des ouvertures 14 qui, comme on le voit sur la coupe transversale de la figure 2, s'étendent radialement depuis l'arbre de la vis jusqu'à la périphérie du filet et sont en outre réparties régulièrement autour de l'axe, les vis étant calées de façon que deux ouvertures 14 viennent en coïncidence périodiquement dans la zone centrale d'engrènement. On contrôle de la sorte le passage d'un débit contrôlé de matière vers l'aval, ce qui détermine un freinage dans la zone A2 et, de ce fait, une compression dans la partie aval de la zone A1. Il en résulte un effet de malaxage intense qui favorise le mélange des ingrédients.

Le mélange ainsi réalisé passe alors dans la zone de cuisson B. Dans cette dernière, les vis sont munies de filets 15 à pas direct, ce dernier pouvant avantageusement se resserrer vers l'aval. Il en résulte un transport avec malaxage de la matière et, dans cette zone, le fourreau est entouré par un manchon de chauffage 4 qui peut être une enceinte parcourue par un fluide caloporteur ou bien un organe de chauffage électrique, par exemple par induction.

De ce fait, les ingrédients mélangés dont la température a déjà été augmentée dans la zone A2 par l'effet des frottements peuvent être chauffés jusqu'à une température élevée, par exemple supérieure à 200°C. En effet, l'effet de malaxage réalisé par les vis, surtout lorsqu'elles sont entraînées dans le même sens, ainsi que la montée en pression de la matière permettent de porter sa température à un niveau très élevé tout en contrôlant le risque de brûlage. Bien entendu, ce niveau dépendra de la matière.

Par exemple, la température de cuisson pourrait être de 180°C pour une farine panifiable, de 205° pour une semoule de blé dur, de 190° pour un mélange de farine et de semoule et de 160° pour une farine de manioc. Mais, dans certains cas, on pourra monter à une température supérieure à 200°, de l'ordre de 240° par exemple. L'utilisation d'une zone A2 à pas inversé en amont de la zone de cuisson B permet de réaliser un bouchon continu de matière qui s'oppose au dégagement de vapeur par l'orifice d'alimentation 25, l'eau restant donc incorporée sous pression à l'intérieur du mélange pendant sa cuisson. Grâce à la teneur en eau importante du mélange et à la température de cuisson élevée, on réalise un éclatement rapide des grains d'amidon du produit végétal dans la zone de cuisson B.

Il sort donc à l'aval de cette zone une pâte gélifiée qui passe immédiatement dans une zone de broyage C constituée, comme on l'a représenté sur la figure 3, de disques malaxeurs excentrés 16 qui permettent un passage vers l'aval de la pâte avec effet de laminage entre les disques et le fourreau.

La pâte ainsi broyée peut plus facilement être soumise à un effet de refroidissement brusque dans une zone de refroidissement D dans laquelle le fourreau est muni, par exemple, d'un circuit de refroidissement 5 constitué de canaux ménagés à l'intérieur du fourreau et parcourus par un fluide caloporteur circulant entre un orifice d'introduction 51 et un orifice d'évacuation 52. La pâte broyée se détend à l'amont de la zone de refroidissement D dans des filets à pas large 17 qui permettent un entraînement en couche mince vers l'aval avec un effet de retournement de la pâte au passage d'une vis à l'autre dans la zone d'engrènement. Il se produit ainsi un effet d'homogénéisation de la température qui favorise un refroidissement très rapide dès le début de la zone D.

Le fourreau est d'autre part muni d'un orifice 27 d'introduction des matières d'addition, placé en aval du début de la zone de refroidissement D, à une distance suffisante pour que, au moment de l'introduction, la température de la pâte soit descendue à un niveau assez bas pour permettre l'introduction des matières d'addition sans risque de cuisson, cette température pouvant être par exemple de l'ordre de 60°C.

En aval de l'orifice 27 d'introduction des matières d'addition, le pas des filets 17 se resserre de façon à augmenter l'effet de malaxage pour favoriser le mélange de la pâte avec les additifs.

Les conditions dans lesquelles le mélange est réalisé dépendent d'ailleurs du résultat que l'on désire obtenir.

Dans le cas, par exemple, où l'on réalise des pâtés, il suffira de bien mélanger des morceaux de viande avec la pâte gélifiée préalablement préparée dans la partie amont de la machine. Cependant, dans la plupart des cas, on voudra réaliser des pâtes plus fines analogues à la quenelle et, dans ce cas, le mélange devra être soumis à un effet d'homogénéisation dans une nouvelle zone E de la machine. Cette zone est constituée également d'un certain nombre d'éléments de vis juxtaposés et placés à l'intérieur d'un troisième élément de fourreau 23 accolé à l'élément 22.

La zone d'homogénéisation peut comporter par exemple une section E1 constituée de disques malaxeurs excentrés 160, dans lesquels le mélange est soumis à un effet de broyage avec laminage, puis une section E2 à pas resserré dans laquelle se produit une compression permettant de faire passer le mélange à travers une grille 18 permettant de réaliser un broyage très fin. A cet effet, la grille 18, interposée à l'intérieur du fourreau dans un plan transversal à l'axe des vis, est munie d'une pluralité d'orifices dont la section est déterminée en fonction du degré de finesse à obtenir et qui constituent un ensemble de filières à travers lesquelles le mélange est extrudé sous forme de filaments qui se répandent ensuite dans une nouvelle section de malaxage E3 munie de filets dont le pas se resserre vers l'aval. La pâte peut passer ensuite dans une nouvelle section E4 munie de disques malaxeurs excentrés dans laquelle elle est soumise à un dernier effet de broyage avec laminage, puis elle est reprise par une section E5 à pas resserré qui permet d'élever la pression pour réaliser une extrusion par la filière 3 placée à l'extrémité aval du fourreau. La filière 3 permet de donner la forme que l'on désire au produit qui est extrudé sous la forme d'un boudin coupé en éléments 6 par un dispositif de coupe 31 placé sur la face aval du fourreau 2.

Le procédé qui vient d'être décrit dans ses grandes lignes présente de nombreux avantages.

On peut noter par exemple que, en raison de l'élévation de température importante réalisée sous pression dans la zone de cuisson, on obtient un effet de stérilisation qui est conservé jusqu'à la sortie de la machine si, du moins, les matières d'addition introduites par l'orifice 26 sont elles-mêmes stérilisées.

Cependant, l'avantage essentiel du procédé réside dans sa souplesse d'utilisation et la grande variété des produits qu'il permet d'obtenir, ces produits pouvant être des produits classiques ou des produits entièrement nouveaux réalisés à partir de matières premières qui, jusqu'à présent, ne pouvaient être valorisées de la sorte.

D'une façon générale, les ingrédients de départ introduits par les orifices 25 et 26 pour la réalisation de la pâte de base pourront comporter:
— de 30 à 60% d'une céréale ou d'une autre matière végétale apportant de l'amidon,
— de 20 à 40% d'une phase liquide qui peut être de l'eau ou du lait,
— une proportion complémentaire d'au moins l'un des produits suivants:

jusqu'à 20% d'un produit protéagineux ou oléagineux constitué de fèves, graines, racines ou tubercules préalablement broyés,
jusqu'à 10% d'un ovoproduit tel que du jaune ou du blanc d'œuf, de la poudre d'œuf, etc.,
jusqu'à 7% d'un produit lacté tel que du lait en poudre, un caséinate ou du sérum de lait.

Bien entendu, les conditions de traitement, et notamment d'homogénéisation et de réglage du degré de finesse, seront déterminées en fonction des ingrédients de départ et du produit que l'on désire réaliser. D'ailleurs, comme on l'a indiqué, lors de la mise au point d'un produit, on commencera par déterminer, au moyen d'essais successifs, la composition des vis et notamment de la zone d'homogénéisation, ainsi que les débits relatifs de matières premières, notamment la teneur en phase liquide et la température et la pression de cuisson pour obtenir un produit acceptable; la machine présente en effet l'avantage de conserver les caractéristiques du produit réalisé si les caractéristiques des ingrédients de départ restent les mêmes, et de pouvoir réaliser en cours de fonctionnement un certain réglage pour s'adapter à de faibles variations des caractéristiques de départ.

A titre d'exemple, on a pu réaliser, dans une machine du type décrit précédemment, des produits comestibles à partir des ingrédients suivants:

*Exemple 1:*

| Farine ordinaire | 60 parts |
|---|---|
| Œufs entiers | 7 parts |
| Poudre de lait 0% | 7 parts |
| Eau | le reste à 100 |

*Exemple 2:*

| Semoule fine | 60 parts |
|---|---|
| Œufs entiers | 7 parts |
| Poudre de lait 0% | 7 parts |
| Eau | lee reste à 100 |

*Exemple 3:*

| Manioc | 20 parts |
|---|---|
| Arachides | 20 parts |
| Farine de riz | 20 parts |
| Eau | le reste à 100 |

*Exemple 4:*

| Semoule | 40 parts |
|---|---|
| Soja farine | 20 parts |
| Sérum de lait | 3 parts |
| Eau | le reste à 100 |

*Exemple 5:*

| Semoule ou farine de: | |
|---|---|
| céréales ou racine ou tubercule ou fèves | 60 parts |
| Lait en poure 0% | 7 parts |
| Sérum de lait ou caséinate | 3 part |
| Œufs entiers | 1 parts |
| Eau | le reste à 100 |

On voit que l'invention permet de réaliser des produits comestibles facilement utilisables à partir de céréales ou de racines locales, ces produits étant stériles et faciles à préparer par simple pochage. C'est pourquoi, selon les recettes, on pourra réaliser aussi bien des produits relativement luxueux adaptés à des pays industrialisés que des produits plus économiques, proches de l'alimentation locale, et par conséquent bien adaptés aux pays en développement.

A titre d'exemple, on pourrait, en adaptant simplement les caractéristiques de la machine, réaliser des produits aussi divers que: farces charcutières et terrines, mousses et soufflés d'entrée et d'entremets, tofu chinois, coréen ou japonais, kamaboko japonais et, d'une façon générale, des produits du genre quenelle de qualité courante avec une matière protéinée de qualité supérieure.

**Revendications**

1. Procédé de préparation d'un produit alimentaire analogue à une quenelle, constitué d'une pâte molle à base d'un produit végétal apportant de l'amidon et dans laquelle on incorpore au moins une matière d'addition, caractérisé par le fait que l'ensemble de la préparation est réalisé à l'intérieur d'un transporteur à vis en plusieurs étapes se succédant en continu et comprenant, de l'amont à l'aval dans le sens de transport, respectivement:
— le mélange du produit végétal, alimenté en continu, avec une phase liquide introduite en quantité juste nécessaire à la recette,
— la cuisson du mélange avec malaxage sous pression et chauffage à une température supérieure à 150°C, jusqu'à éclatement des grains d'amidon du produit végétal et obtention d'une pâte molle gélatinisée contenant de 25 à 40% d'eau,
— le broyage de ladite pâte gélatinisée,
— le refroidissement brusque de la pâte broyée en moins d'une minute jusqu'à une température au plus égale à 60°C permettant l'incorporation de la matière d'addition sans risque de cuisson de celle-ci,
— l'introduction en continu, en proportion correspondant à la recette, de la matière d'addition dans la pâte et son mélange avec malaxage avec celle-ci,

— l'extrusion du mélange par une filière (3) placée à l'extrémité aval du transporteur à vis, ce dernier comprenant au moins deux vis (1) entraînées en rotation à l'intérieur d'un fourreau allongé (2), muni d'orifices (25, 26, 27) d'introduction, aux endroits voulus, des différents ingrédients, les vis (1) étant constituées de sections successives de transport et de traitement correspondant respectivement aux étapes du procédé.

2. Procédé de préparation d'un produit alimentaire selon la revendication 1, caractérisé par le fait qu'après incorporation et mélange de la matière d'addition avec la pâte gélifiée, le mélange est soumis à un procesuss d'homogénéisation et de broyage fin poursuivi jusqu'à un degré de finesse déterminé pour le produit.

3. Procédé de préparation d'un produit alimentaire selon la revendication 1, caractérisé par le fait que le broyage de la pâte gélifiée est réalisé par passage dans une section (C) des vis (1) constituée de disques malaxeurs excentrés (16).

4. Procédé de préparation d'un produit alimentaire selon l'une des revendications précédentes, caractérisé par le fait que le broyage fin est réalisé par extrusion du mélange à travers une grille (18) placée en travers du fourreau (2) et munie d'orifices de passage de section déterminée pour l'obtention du degré de finesse désiré.

5. Dispositif de préparation d'un produit alimentaire analogue à une quenelle, constitué d'une pâte mole à base d'un produit végétal apportant de l'amidon et dans laquelle est incorporée une matière d'addition, caractérisé par le fait qu'il est constitué d'un transporteur à vis comprenant au moins deux vis de transport (1) imbriquées, entraînées en rotation à l'intérieur d'un fourreau allongé (2) et constituées chacune de sections accolées munies d'organes de transport et de traitement spécifiques et déterminant des zones successives correspondant aux étapes successives de la préparation du produit et comprenant respectivement, au moins:

— une zone (A) de transport et de mélange munie de filets hélicoïdaux (14) à pas large et dans laquelle débouchent des orifices (25, 26) d'alimentation en produit végétal et en phase liquide, ménagés dans le fourreau (2),

— une zone (B) de cuisson et de malaxage sous pression munie de filets dont le pas se resserre progressivement et dans laquelle le fourreau (2) est muni d'organes (4) de chauffage de la matière transportée, jusqu'à une température au moins égale à 150°C,

— une zone (C) de broyage munie de disques malaxeurs excentrés (16),

— une zone (D) de refroidissement de la pâte broyée jusqu'à une température au plus égale à 60°C et d'incorporation d'au moins une matière d'addition, dans laquelle le fourreau est muni d'organes (5) de refroidissement et d'au moins un orifice (27) d'introduction de la matière d'addition,

— une zone (F) de compression à pas resserré précédant immédiatement une filière (3) d'extrusion du produit, placée à l'extrémité aval du fourreau.

6. Dispositif de préparation selon la revendication 5, caractérisé par le fait que la zone (D) de refroidissement et d'incorporation des matières d'addition est suivie d'une zone (E) d'homogénéisation et de réglage du degré de finesse du mélange.

7. Dispositif de préparation selon la revendication 6, caractérisé en ce que la zone (E) d'homogénéisation et de réglage du degré de finesse comprend une grille (18) interposée en travers du fourreau (2) et munie d'une pluralité d'orifices de passage du produit, de section déterminée en fonction du degré de finesse à obtenir.

8. Dispositif de préparation selon l'une des revendications 6 et 7, caractérisé par le fait que la zone (E) d'homogénéisation et de réglage de degré de finesse est constituée d'une série de sections de traitement successives $(E_1, E_2...)$ munies d'organes de hachage et de laminage dont la nature et le nombre sont déterminés en fonction du degré de finesse à obtenir.

9. Dispositif de préparation selon la revendication 7, caractérisé par le fait que la zone (E) d'homogénéisation et de réglage du degré de finesse comprend au moins une section $(E_3)$ de compression munie de filets à pas resserré de l'amont à l'aval, une section $(E_4)$ munie de disques malaxeurs excentrés (16) et/ou une section munie de filets (13) à pas inversé et comportant des ouvertures (14) de passage contrôlé vers l'aval du produit.

**Patentansprüche**

1. Verfahren zur Herstellung eines Nahrungsmittels in einer einem Klösschen entsprechenden Form aus einem weichen Teig auf der Basis eines stärkehaltigen Pflanzenprodukts, in den mindestens ein Zusatzmittel eingebracht wird, dadurch gekennzeichnet, dass die Gesamtherstellung in einem Schneckenförderer in mehreren, kontinuierlich aufeinanderfolgenden Stufen von oben nach unten in Förderrichtung durchgeführt wird:

— Vermischen des kontinuierlich zugegebenen Pflanzenprodukts mit einer Flüssigphase, die in einer dem Rezept genau entsprechenden Menge eingebracht wird,

— Backen unter Verknetung des Gemisches unter Druck und Erhitzen auf eine Temperatur über 150°C bis zum Auseinanderbrechen der Stärkekörner des Pflanzenprodukts und zur Herstellung eines weichen, gelatinierten Teigs mit 25 bis 40% Wasser,

— Mahlen des gelatinierten Teigs,

— plötzliches Abkühlen des gemahlenen Teigs in weniger als einer Minute bis auf eine Temperatur von höchstens 60°C, wodurch das Zusatzmittel ohne Risiko seines Backens zugegeben werden kann,

— kontinuierliche Zugabe in dem Rezept entsprechenden Anteilen des Zusatzmittels in den Teig und Vermischen durch Verkneten,

— Extrusion des Gemisches durch eine Düse (3) am äussersten unteren Ende des Schneckenförderers, der mindestens zwei drehbare Schnecken (1) im Inneren eines länglichen Gehäuses (2) mit Öffnungen (25, 26, 27) an den gewünschten Stellen zur Einführung der verschiedenen Bestandteile umfasst, wobei die Schnecken (1) aus aufeinanderfolgenden Förder- und Behandlungsabschnitten, die den entsprechenden Verfahrensstufen entsprechen, bestehen.

2. Verfahren zur Herstellung eines Nahrungsmittels nach Anspruch 1, dadurch gekennzeichnet, dass nach Zugabe und Vermischen des Zusatzmittels mit dem gelierten Teig das Gemisch homogenisiert und bis zu dem für das Produkt gewünschten Feinheitssgrad fein gemahlen wird.

3. Verfahren zur Herstellung eines Nahrungsmittels nach Anspruch 1, dadurch gekennzeichnet, dass der gelierte Teig durch Durchleiten durch einen Abschnitt (C) der Schnecken (1), der aus exzentrischen Knetscheiben (16) besteht, gemahlen wird.

4. Verfahren zur Herstellung eines Nahrungsmittels nach einem der vorstehenden Ansprüche, dadurch gekennzeichnet, dass das feine Malen durch Extrusion des Gemisches durch ein Gitter (18) durchgeführt wird, das quer zum Gehäuse (2) angeordnet ist und Durchgangsöffnungen mit einem für den gewünschten Feinheitsgrad bestimmten Durchmesser aufweist.

5. Vorrichtung zur Herstellung eines Nahrungsmittels in einer einem Klösschen entsprechenden Form aus einem weichen Teig auf der Basis eines stärkehaltigen Pflanzeprodukts, in den mindestens ein Zusatzmittel eingebracht wird, gekennzeichnet durch einen Schneckenförderer mit mindestens zwei ineinandergreifenden, drehbaren Förderschnecken (1) im Inneren eines länglichen Gehäuses (2), die je aus eingebauten Abschnitten mit Mitteln zur Beförderung und zu spezifischen Behandlungen bestehen, aufeinanderfolgende, den aufeinanderfolgenden Stufen der Herstellung des Nahrungsmittels entsprechende Zonen bestimmen und mindestens folgende Zonen umfassen:

— eine Zone (A) zur Beförderung und zur Vermischung mit schraubenförmigen grossen Gewinden (14), in die in das Gehäuse (2) angeordnete Öffnungen (25, 26) zur Einführung des Pflanzenprodukts und der Flüssigphase münden,

— eine Zone (B) zum Backen und Verkneten unter Druck mit sich allmählich verengendem Gewinde, in der das Gehäuse (2) Vorrichtungen (4) zum Erhitzen der beförderten Masse bis auf eine Temperatur von mindestens 150°C aufweist,

— eine Zone (C) zum Mahlen mit exzentrischen Knetscheiben (16),

— eine Zone (D) zur Abkühlung des gemahlenen Teigs bis auf eine Temperatur von höchstens 60°C und zur Einführung mindestens eines Zusatzmittels, in der das Gehäuse Vorrichtungen (5) zur Abkühlung und mindestens eine Öffnung (27) zur Einführung des Zusatzmittels aufweist,

— eine Zone (F) zur Verdichtung mit engem Gewinde unmittelbar vor einer Extrusionsdüse (3) des Produkts am äussersten unteren Ende des Gehäuses.

6. Herstellungsvorrichtung nach Anspruch 5, dadurch gekennzeichnet, dass auf die Zone (D) zur Abkühlung und Zugabe der Zusatzmittel eine Zone (E) zur Homogenisierung und Einstellung des Feinheitsgrades des Gemisches folgt.

7. Herstellungsvorrichtung nach Anspruch 6, dadurch gekennzeichnet, dass die Zone (E) zur Homogenisierung und Einstellung des Feinheitsgrades ein Gitter (18) umfasst, das quer zum Gehäuse (2) angeordnet ist und viele Durchgangsöffnungen für das Produkt mit einem für den gewünschten Feinheitsgrad bestimmten Durchmesser aufweist.

8. Herstellungsvorrichtung nach Anspruch 6 oder 7, dadurch gekennzeichnet, dass die Zone (E) zur Homogenisierung und zur Einstellung des Feinheitsgrades aus einer Reihe aufeinanderfolgender Behandlungsabschnitte ($E_1$, $E_2$, ...) mit Vorrichtungen zum Schneiden und Laminieren besteht, deren Art und Anzahl von dem gewünschten Feinheitsgrad abhängt.

9. Herstellungsvorrichtung nach Anspruch 7, dadurch gekennzeichnet, dass die Zone (E) zur Homogenisierung und Einstellung des Feinheitsgrades mindestens einen Verdichtungsabschnitt ($E_3$) mit sich von oben nach unten verengenden Gewinden, einen Abschnitt ($E_3$) mit exzentrischen Knetscheiben (16) und/oder einen Abschnitt mit umgekehrten Gewinden (13) und nach unten gerichteten Durchgangsöffnungen (14) umfasst.

## Claims

1. A process for the preparation of a food product, similar to a quenelle, consisting of a soft paste based on a plant product contributing starch, and in which at least one additional substance is incorporated, characterized in that the whole preparation is carried out inside a screw conveyor in several continuously consecutive steps comprising, from upstream to downstream in the direction of ravel, respectively:

— mixing of the plant product, supplied continuously, with a liquid phase introduced unprecisely the quantity required by the recipe,

— cooking of the mix with kneading under pressure and heating to a temperature above 150°C, until the grains of starch in the plant product burst and until a gelatinized soft paste containing from 25 to 40% water is obtained,

— grinding of the said gelatinized paste,

— abrupt cooling of the ground paste in less than one minute to a temperature of at most 60°C, which enables the additional substance to be incorporated without the risk of cooking the latter,

— continuous introduction, in a proportion corresponding to the recipe, of the additional substance into the paste and its mixing by kneading with the latter,

— extrusion of the mix through a die (3) placed at the downstream end of the screw conveyor, the latter comprising at least two screws (1) which are driven in rotation inside an elongated barrel (2), fitted with orifices (25, 26, 27) for introducing the various ingredients at the required locations, the screws (1) consisting of consecutive conveying and processing sections corresponding to the process steps respectively.

2. A process for the preparation of a food product according to Claim 1, characterized in that after incorporation and mixing of the additional substance with the gelled paste, the mix is subjected to a process of homogenization and of fine grinding, continued to a specified degree of fineness for the product.

3. A process for the preparation of a food product according to Claim 1, characterized in that the grinding of the gelled paste is produced by passing it through a section (C) of the screws (1) consisting of eccentric kneading discs (16).

4. A process for the preparation of a food product according to one of the preceding claims, characterized in that the fine grinding is produced by extrusion of the mixture through a grid (18) placed across a barrel (2) and equipped with passage orifices of a specified cross-section to produce the required degree of fineness.

5. A device for the preparation of a food product, similar to a quenelle, consisting of a soft paste based on a plant product contributing starch and in which an additional substance is incorporated, characterized in that it consists of a screw conveyor comprising at least two intermeshed conveying screws (1), driven in rotation inside an elongated barrel (2) and each consisting of adjoining sections equipped with specific conveying and processing members and determining consecutive zones corresponding to the consecutive steps in the preparation of the product and comprising, respectively, at least:
— a conveying and mixing zone (A) which is fitted with coarse-pitch helical threads (14) and into which there open feed orifices (25, 26) for a plant product and for a liquid phase, which are arranged in the barrel (2),
— a zone (B) for cooking and kneading under pressure, equipped with threads whose pitch becomes progressively finer and in which the barrel (2) is fitted with means (4) for heating the conveyed material, to a temperature of at least 150°C,
— a grinding zone (C) equipped with eccentric kneading discs (16),
— a zone (D) for cooling the ground paste to a temperature of at most 60°C and for incorporating at least one additional substance, in which the barrel is fitted with means of cooling (5) and at least one orifice (27) for introducing the additional substance, and
— a fine-pitch compression zone (F), immediately preceding a die (3) for extruding the product, placed at the downstream end of the barrel.

6. A preparation device according to Claim 5, characterized in that the zone (D) for cooling and for incorporating additional substances is followed by a zone (E) for homogenization and for controlling the degree of fineness of the mix.

7. A preparation device according to Claim 6, characterized in that the zone (E) for homogenization and for controlling the degree of fineness comprises a grid (18) inserted across the barrel (2) and equipped with a plurality of passage orifices for the product, with a cross-section determined as a function of the degree of fineness to be obtained.

8. A preparation device according to one of Claims 6 and 7, characterized in that the zone (E) for homogenizing and adjusting the degree of fineness consists of a series of consecutive processing sections ($E_1$, $E_2$, ...) equipped with chopping and rolling members whose nature and number are determined as a function of the degree of fineness to be obtained.

9. A preparation device according to Claim 7, characterized in that the zone (E) for homogenizing and for controlling the degree of fineness comprises at least one compression section ($E_3$) equipped with threads whose pitch becomes finer from upstream to downstream, a section ($E_4$) equipped with eccentric kneading discs (16) and/or a section equipped with reverse-pitch threads (13) and comprising openings (14) for a controlled downstream passage of the product.

FIG.1

FIG.2

FIG.3